# EUROPÄISCHE PATENTSCHRIFT

(11) **EP 0 697 829 B1**
(45) Veröffentlichungstag und Bekanntmachung des Hinweises auf die Patenterteilung: **02.12.1998**
(21) Anmeldenummer: 95911278.0
(22) Anmeldetag: 01.03.1995
(51) Int. Cl.: A47J 17/14, A47J 17/02

(54) **SCHÄLVORRICHTUNG**
PEELER
DISPOSITIF D'EPLUCHAGE

(30) Priorität: 15.03.1994 AT 557/94
(43) Veröffentlichungstag der Anmeldung: 28.02.1996
(73) Patentinhaber: SCHÄDLE, Erwin, 85445 Schwaig (DE)
(72) Erfinder: SCHÄDLE, Erwin, 85445 Schwaig (DE)
(74) Vertreter: von Bülow, Tam, Dr.
(86) Internationale Anmeldenummer: EP9500743
(87) Internationale Veröffentlichungsnummer: WO9524850

(56) Entgegenhaltungen:
- DE-A- 2 258 126
- DE-B- 1 288 257
- DE-U- 9 415 688
- GB-A- 2 244 208
- US-A- 4 038 915
- US-A- 5 230 155

## Beschreibung

Die Erfindung betrifft eine Schälvorrichtung für Früchte, mit einem mit seiner Messerschneide entlang der zu schälenden Oberfläche der Frucht bewegbaren Schälmesser, wobei das Schälmesser auf einem mittels eines vorzugsweise elektrischen Antriebsaggregates in Schwingungen versetzten Schwingarm angeordnet ist (siehe z.B. GB-A-2 244 208).

Unter dem Begriff "Früchte" werden hierbei Lebensmittel verstanden, deren Oberfläche durch Schälen bearbeitet werden kann, insbesondere Gemüse, wie Rüben, Karotten, Meerettich, Kartoffel, Kohlrüben, Spargel, u.dgl., und Obst, wie Äpfel, Birnen, Südfrüchte u.dgl.

Diese Früchte wurden bisher in der Regel von Hand mit einem Messer geschält, was mühsam ist und einen großen Arbeitsund Zeitaufwand erfordert.

Die vorliegende Erfindung hat sich zur Aufgabe gestellt, eine Schälvorrichtung zu schaffen, die mittels eines Antriebsaggregates antreibbar ist und die bei einfacher Handhabung ein rasches Schälen der Früchte ermöglicht. Zur Lösung dieser Aufgabe schlägt die Erfindung vor, daß der Schwingarm unterhalb einer Abstützfläche für die zu schälende Frucht vorgesehen ist, und daß das Schälmesser eine Messeröffnung in der Abstützfläche durchsetzt, wobei die Messerschneide über die Abstützfläche vorsteht.

Bei der erfindungsgemäßen Schälvorrichtung wird somit das Schälmesser durch den Schwingarm in Schwingungen versetzt. Der Antrieb des Schwingarmes erfolgt hierbei vorzugsweise elektrisch, wobei der Aufbau des Antriebsaggregates ähnlich jenem eines elektrischen Rasierapparates mit einem Schwingkopf ausgebildet sein kann oder mit einem sich drehenden Elektromotor und einem Exzenterantrieb. Es ist aber auch möglich, ein anderes Antriebsaggregat zu verwenden, beispielsweise eine wasserbetriebene Turbine, die mit einem Schlauch an die Wasserleitung angeschlossen werden kann, was beispielsweise dann vorteilhaft ist, wenn keine elektrische Energie zur Verfügung steht.

Wird die zu schälende Frucht von Hand über die Abstützfläche bewegt, so erfolgt durch die über die Abstützfläche vorstehende Messerschneide eine Oberflächenbearbeitung dieser Frucht, bei welcher ein Teil dieser Oberfläche abgetragen wird, also ein Schälvorgang erfolgt. Es ist lediglich nötig, die zu schälende Frucht nacheinander in verschiedenen Lagen so lange über die Abstützfläche zu bewegen, bis diese Frucht vollständig geschält ist.

Es hat sich als zweckmäßig erwiesen, wenn die Abstützfläche von der Oberfläche eines Deckels eines Behälters gebildet ist, in dem vorzugsweise eine oder mehrere Ausnehmungen zum Hindurchtreten der Schalen vorgesehen sind. Dieser Behälter bildet einerseits einen stabilen Fuß für die Abstützfläche, in welchem der unterhalb dieser Abstützfläche befindliche Schwingarm aufgenommen ist, und nimmt weiters die bei der Bearbeitung der Frucht mittels des Schälmessers entstehenden Schalen auf, die dann durch Entleeren des Behälters auf einfache Weise entfernt werden können.

Die zu bearbeitenden Früchte weisen praktisch immer eine annähernd kegelstumpfförmige, zylindrische oder kugelförmige Gestalt auf. Um nun mit der Messerschneide bei einer bestimmten Lage der Frucht auf der Abstützfläche einen möglichst großen Bereich der Oberfläche dieser Frucht in einem Arbeitsgang schälen zu können, weist gemäß einem weiteren Merkmal der Erfindung die Abstützfläche im Bereich der Messeröffnung eine gekrümmte und/oder aus zumindest zwei miteinander einen Winkel einschließenden Ebenen gebildete Oberfläche auf und es ist die Messerschneide dieser Form der Abstützfläche angepaßt.

Um die erfindungsgemäße Schälvorrichtung mit gutem Wirkungsgrad bei verschieden großen und/oder verschieden geformten Früchten anwenden zu können, ist es beispielsweise möglich, mehrere eine unterschiedliche Oberfläche aufweisende Behälterdeckel und dazu passende, auf dem Schwingarm angeordnete Schälmesser vorrätig zu halten und bei Bedarf einen entsprechend der zu bearbeitenden Frucht geformten Deckel samt dem zugehörigen Schälmesser zu verwenden.

Es ist von Vorteil, wenn die Dicke der von den zu bearbeitenden Früchten zu entfernenden Schalen, in Abhängigkeit von der Art der Früchte und von der nachfolgenden Verwendung der geschälten Früchte, verändert werden kann. Zu diesem Zweck kann erfindungsgemäß der Abstand der Messerschneide von der Abstützfläche einstellbar sein. Je größer dieser Abstand ist, desto größer ist die Schalendicke.

Weiters ist es zweckmäßig, wenn der Schwingarm mit dem Antriebsaggregat lösbar verbunden ist. Dadurch ist nicht nur eine einfache Reinigung des schwingarmes mit dem daran angeordneten Schälmesser ermöglicht, ohne daß das Antriebsaggregat mit dem Wasser in Berührung kommt, was inbesondere bei elektrischen Antriebsaggregaten gefährlich und daher unzulässig ist, sondern es wird auch die wahlweise Verwendung von Schwingarmen mit verschieden geformten Schälmessern auf einfache Weise ermöglicht.

Das Antriebsaggregat ist vorzugsweise in einem seitlich am Behälter, vorzugsweise um eine Achse schwenkbar oder entfernbar, befestigten Gehäuse angeordnet, wobei in der Seitenwand des Behälters eine Durchtrittsöffnung für den Schwingarm vorgesehen ist. Auf diese Weise wird eine sichere Unterbringung des Antriebsaggregates außerhalb des Behälters möglich, wobei trotzdem die erforderliche Anbringung des Schwingarmes mit dem Schälmesser unterhalb der Abstützfläche gewährleistet ist. Dadurch, daß das Gehäuse, in dem das Antriebsaggregat untergebracht ist, schwenkbar oder entfernbar an der Seitenwand des Behälters befestigt ist, wird nicht nur bei der Aufbewahrung der erfindungsgemäßen Vorrichtung der Platzbedarf verringert, sondern auch das Reinigen des Behälters mit Wasser ermöglicht, ohne daß das Antriebsaggregat mit diesem Wasser in Berührung gelangt.

Um die gewünschte Einstellung des Abstandes der Messerschneide von der Abstützfläche zu ermöglichen, kann das Antriebsaggregat im Gehäuse, beispielsweise durch einen mittels einer an der Gehäuseseite angeordneten Rändelschraube betätigbaren Schneckentrieb, höhenverstellbar angeordnet sein. Durch die Höhenverstellung des Antriebsaggregates ändert sich auch die Lage des mit dem Antriebsaggregat verbunden Schwingarmes und damit des am Antriebsaggregat befestigten Schälmessers in Bezug auf die Abstützfläche.

Gemäß einem weiteren Merkmal der Erfindung besteht der Behälter aus einem Behälterunterteil und einem das Gehäuse für das Antriebsaggregat aufweisenden Behälteroberteil. Im Behälterunterteil sammeln sich die durch die Ausnehmung im Behälterdeckel in das Behälterinnere gelangenden Schalen und dieser Behälterunterteil kann leicht entfernt und, beispielsweise auch in einer Spülmaschine, gereinigt werden.

Um eine sichere Abstützung des seitlich vom Behälter abstehenden Gehäuses für das Antriebsaggregat, welches den Schwingarm in Schwingungen versetzt und daher Vibrationen unterworfen ist, sicherzustellen, kann dieses Gehäuse an seinem vom Behälter abstehenden Ende mit einem, vorzugsweise schwenkbar oder abnehmbar am Gehäuse befestigten, Stützfuß versehen sein. Ist dieser verschwenkbar oder abnehmbar am Gehäuse befestigt, und ist dieses Gehäuse selbst, wie bereits erwähnt, schwenkbar oder entfernbar am Behälter angeordnet, so ist der Platzbedarf für die Verwahrung der erfindungsgemäßen Schälvorrichtung gering.

Im folgenden wird die Erfindung anhand von Ausführungsbeispielen im Zusammenhang mit der Zeichnung ausführlicher erläutert. Es zeigt:
- Fig. 1: einen schematischen Schnitt durch eine Schälvorrichtung nach einem ersten Ausführungsbeispiel der Erfindung;
- Fig. 2: eine Draufsicht auf die Schälvorrichtung der Fig. 1 gesehen in Richtung des Pfeiles II in Fig. 1;
- Fig. 3: eine schematische Schnittansicht einer Schälvorrichtung nach einem zweiten Ausführungsbeispiel der Erfindung;
- Fig. 4: einen Schnitt längs der Linie IV-IV der Fig. 3; und
- Fig. 5: eine schematische Seitenansicht einer Schälvorrichtung nach einem dritten Ausführungsbeispiel der Erfindung.

Die erfindungsgemäße Schälvorrichtung weist einen Behälter 1 auf, der aus einem Behälterunterteil 2, einem mit diesem gegen Verdrehung gesichert verbundenen, jedoch abnehmbaren Behälteroberteil 3 und aus einem mit diesem unverdrehbar verbundenen, jedoch abnehmbaren Deckel 4 besteht. Am Behälteroberteil 3 ist seitlich ein Gehäuse 5 vorgesehen, das entweder um eine Achse 6 schwenkbar mit dem Behälteroberteil 3 verbunden ist oder abnehmbar am Behälteroberteil 3 befestigt ist. Dieses Gehäuse 5 ist weiters an seinem vom Behälteroberteil 3 abstehenden Ende über einen Stützfuß 7 abgestützt, der gleichfalls entewder schwenkbar oder abnehmbar mit dem Gehäuse 5 verbunden ist. Im Inneren des Gehäuses 5 befindet sich ein elektrisches Antriebsaggregat 8, das einen Schwingkopf ähnlich wie ein elektrischer Rasierapparat aufweist. Die Stromzufuhr zum elektrischen Antriebsaggregat 8 erfolgt durch ein Kabel 9. Das Gehäuse 5 weist weiters einen Schalter 10 zum Ein- und Ausschalten des elektrischen Antriebsaggregates auf.

Die Höhenlage des elektrischen Antriebsaggregates 8 im Gehäuase 5 kann über einen Schneckentrieb 11 mittels einer an der Gehäuseaußenseite vorgesehenen Rändelschraube 12 eingestellt werden.

Mit dem Schwingkopf ist ein Schwingarm 13 abnehmbar verbunden, der durch eine Druchtrittsöffnung 14 im Behälteroberteil 3 in diesen hineinragt und an seinem abgewinkelten Ende ein Schälmesser 15 trägt, das durch eine Messeröfnung 16 im Deckel 4 hindurchrragt und dessen Messerschneide 17 die eine Abstützfläche für die zu schälende Frucht bildende Oberflcähe 18 des Deckels 4 überragt. Das Maß, über welches die Messerschneide 17 von der Deckeloberfläche 18 vorsteht, kann durch den Schneckentrieb 11 mittels der Rändelschraube 12 eingestellt werden.

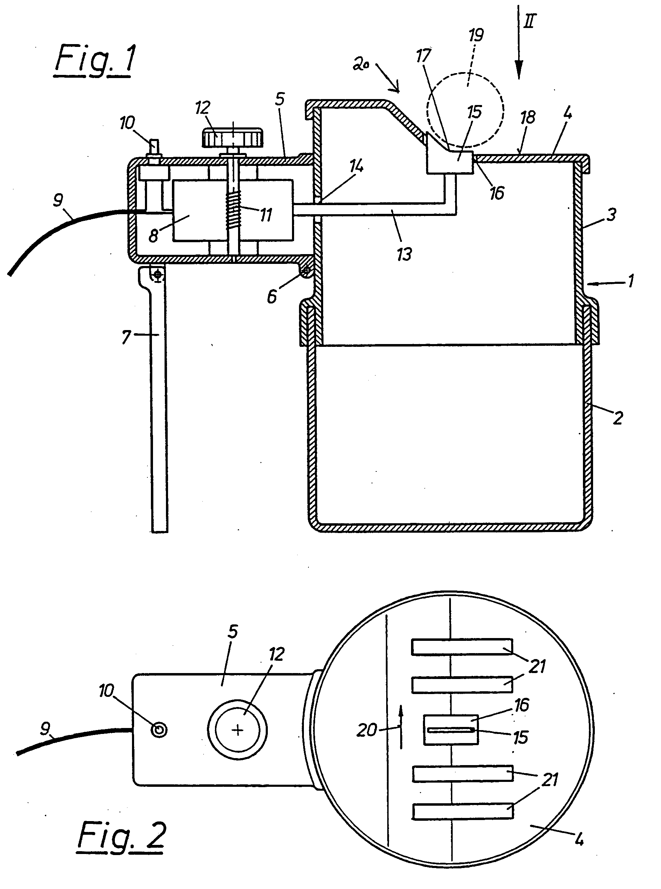

Wie aus Fig. 1 hervorgeht, ist die Oberfläche 18 des Deckels 4 im Bereich der Messeröffnung 16 aus zwei miteinander einen stumpfen Winkel einschließenden Ebenen zusammengesetzt. Es kann aber diese Oberfläche auch gekrümmt ausgebildet sein. Die Messerschneide 17 weist eine der Oberflcähe 18 angepaßte Form auf. Dadurch wird in einem Arbeitsvorgang das Schälen eines größeren Bereiches der in der Regel einen kreisförmigen Querschnitt aufweisenden Frucht ermöglicht.

Soll eine Frucht, beispielsweise eine Karotte, deren Querschnitt in Fig. 1 durch einen strichlierten Kreis 19 angedeutet ist, geschält werden, wo wird sie händisch in Richtung des Pfeiles 20 in Fig. 2 über die Messerschneide 17 des Schälmessers 15 geführt, wobei durch die Schwingungen des Messers eine Oberflächenbearbeitung und somit ein Schälvorgang dieser Frucht erfolgt. Die Dicke der Schalen wird durch das Maß bestimmt, um welches die Messerschneide 17 über die Oberfläche 18 des Deckels vorsteht. Die Schalen fallen durch Ausnehmungen 21 in den Behälterunterteil 2, der nach Abheben des Oberteiles 3 entleert werden kann.

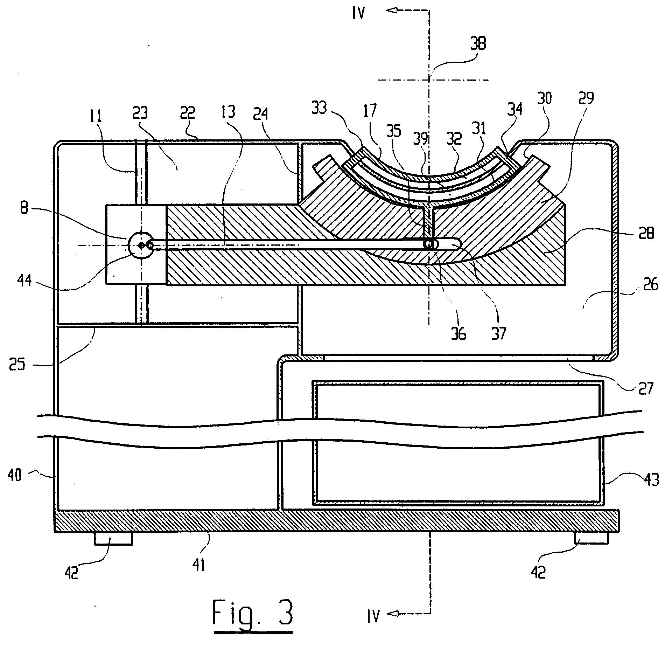

Im Ausführungsbeispiel der Fig. 3 ist die Schälmaschine komplett in einem Gehäuse 22 untergebracht, das beispielsweise aus Kunststoff sein kann. In diesem Gehäuse 22 befindet sich eine erste Kammer 23, in der das Antriebsaggregat 8 untergebracht ist und in welches durch eine Trennwand 24 der Schwingarm 13 hindurchragt. Die Kammer 23 ist durch eine weitere Trennwand 25 von einem Ständer 40 abgetrennt. Durch die Trennwand 24 entsteht eine weitere Kammer 26 im Gehäuse 22, in welcher das Schneidwerkzeug angeordnet ist. Diese Kammer hat unten eine Öffnung 27, durch welche Schalen und sonstige Abfälle herausfallen können. Durch die Trennwand 24 hindurch erstreckt sich ein Stützorgan 28, das eine Messerführung 29 trägt. Die Messerführung 29 hat eine Führungsfläche 30, die kreisbogenförmig gewölbt ist und eine Art Kulissenführung für das Messer 17 bildet. Das Messer hat einen ebenfalls kreisbogenförmig gekrümmten Messerfuß 31, der auf der Führungsfläche 30 aufliegt. Über zwei Stege 33 und 34 ist somit die Messerschneide 17 im Abstand zum Messerfuß 31 gehalten, wodurch ein Zwischenraum 32 zwischen der Schneide 17 und dem Messerfuß 31 gebildet wird. Durch diesen Zwischenraum 32 gleiten die von der Messerschneide 17 abgeschnittenen Schalen hindurch und fallen dann seitlich an dem Stützorgan 28 und der Messerführung 29 vorbei durch die Öffnung 27 aus der Kammer 26 heraus.

Am Messerfuß 31 ist ein Mitnehmerarm 35 angebracht oder einstückig mit diesem verbunden, wobei dieser Messerarm im wesentlichen senkrecht nach unten ausgerichtet ist, wobei die Verlängerung seiner Achse durch den Kreismittelpunkt 38 geht. Dieser Kreismittelpunkt 38 ist der gemeinsame Mittelpunkt der Kreissegmente der Messerschneide 17, des Messerfußes 31 und der Führungsfläche 30. Am Ende des Führungsarmes 35 ist der Schwingarm 13 über einen Gelenkbolzen 36 gelenkig verbunden. Wird nun der Schwingarm 13 in eine im wesentlichen längs seiner Achse verlaufende, hin- und hergehende Bewegung versetzt, so gleitet das Messer an der Führungsfläche 30 hin und her und vollführt eine Schwingbewegung längs eines Kreisbogens. Der Mittelpunkt dieses Kreisbogens ist ebenfalls der Kreismittelpunkt 38. Um diese Bewegung zu ermöglichen, hat die Messerführung 29 ein Langloch 37.

Der mechanische Antrieb des Schwingarmes 13 kann über einen Schwingankerantrieb erfolgen. Es ist aber auch möglich, das Antriebsaggregat als drehbaren Elektromotor auszugestalten und den Schwingarm 13 über einen Exzenterantrieb mit diesem Motor 8 zu verbinden. Selbstverständlich sind auch die anderen oben genannten Antriebsmöglichkeiten gegeben.

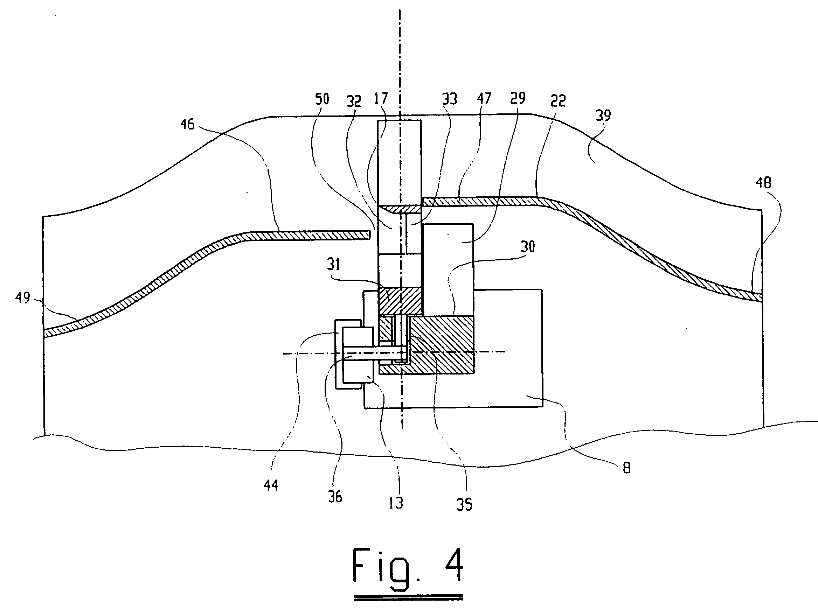

Das Gehäuse hat eine von oben her zugängliche Öffnung, in welcher das Messer gelagert ist. Die Messerschneide 17 steht zumindest von einer Seite her, wie noch genauer im Zusammenhang mit Fig. 4 erläutert wird, über diese Öffnung heraus. Das Maß dieses Herausstehens kann durch eine Einstellvorrichtung, wie z.B. einen schneckentrieb verändert werden, indem nämlich zumindest die gesamte Schneideinheit mit dem Stütsorgan 28, der Messerführung 29 und dem Messer vertikal verschoben werden kann. Zweckmäßig ist es, wenn auch der Motor 8 mit verschoben wird, was im vorliegenden Falle dadurch gegeben ist, daß der Motor fest mit dem Stützorgan 28 verbunden ist.

Der erwähnte Fuß 40 ist mit einem Boden 41 verbunden, der Stützfüße 42 zur Auflage auf einem Tisch hat. Die beiden Kammern 23 und 26, der Fuß 40 und der Boden 41 bilden ein C-förmiges Gestell, wobei in den Zwischenraum dieses C, d.h. zwischen die Kammer 26 und den Boden 41 ein Auffangbehälter 43 eingeschoben werden kann, der unterhalb der Öffnung 27 liegt und die abgeschnittenen Schalen auffängt. Im dargestellten Ausführungsbeispiel sind die Kammern 23 und 26 vollständig voneinander getrennt, so daß auch ein Reinigen des Schneidwerkzeuges mit Wasser unproblematisch ist und insbesondere kein Wasser in die Kammer 23 eindringen kann.

Schließlich ist aus Fig. 3 noch zu erkennen, daß das Gehäuse im Bereich des Messers eine Mulde 39 bildet, in welcher die zu schälenden Früchte geführt werden.

Fig. 4 zeigt eine teilweise Schnittansicht längs der Linie IV-IV der Fig. 3. Aus Fig. 4 ist insbesondere zu erkennen, daß das Messer 17, 31 nicht nur an der Führungsfläche 30 geführt ist sondern auch gegen ein Verschieben in Schneidrichtung an der Messerführung 29 abgestützt ist. Die Messerführung 29 hat demgemäß einen L-förmigen Querschnitt. Der Arm 35 erstreckt sich in eine Öffnung der Messerführung. Mit dem Gelenkbolzen 36 ist er gelenkig an dem Schwingarm 13 angelenkt. Weiter ist in der Schnittansicht der Fig. 4 besser zu erkennen, wie die Messerschneide 17 gegenüber der Oberseite des Gehäuses versetzt angeordnet ist. Die Oberseite des Gehäuses ist in Bewegungsrichtung der Frucht vor der Messerschneide 17 gegenüber dieser versetzt angeordnet, so daß zwischen der Gehäuseoberseite 46 und der Messerschneide 17 ein Spalt 32 entsteht. Auch von oben gesehen ist zwischen der Messerschneide 17 und der Gehäusewand ein kleiner Spalt 50 vorhanden. Durch vertikales Verschieben des Messers kann der Schneidspalt eingestellt werden. An der Austrittsseite für die abgeschnittenen Schalen, d.h. entgegengesetzt zur Messerschneide 17 ist die Oberseite 47 des Gehäuses gegenüber der Oberseite 46 versetzt angeordnet und zwar so, daß die Oberseite 17 etwas oberhalb der Oberseite der Messerschneide 17 liegt oder zumindest mit dieser fluchtet. Damit wird sichergestellt, daß abgeschnittene Schalen nur durch die Kammer 26 hindurchfallen und nicht oben auf der Arbeitsfläche 46, 47 liegen bleiben. Diese Arbeitsfläche kann durchgehend eben sein. Sie kann aber auch gegenüber der Oberseite des Gehäuses etwas angehoben sein, wie durch die beiden abfallenden Schrägen 48 und 49 angedeutet ist. Die Mulde 39, in der die zu bearbeitende Frucht geführt wird, hat somit in Bewegungsrichtung der Frucht eine Erhebung (46, 47), wo die Schale abgeschnitten wird und fällt anschließend wieder ab.

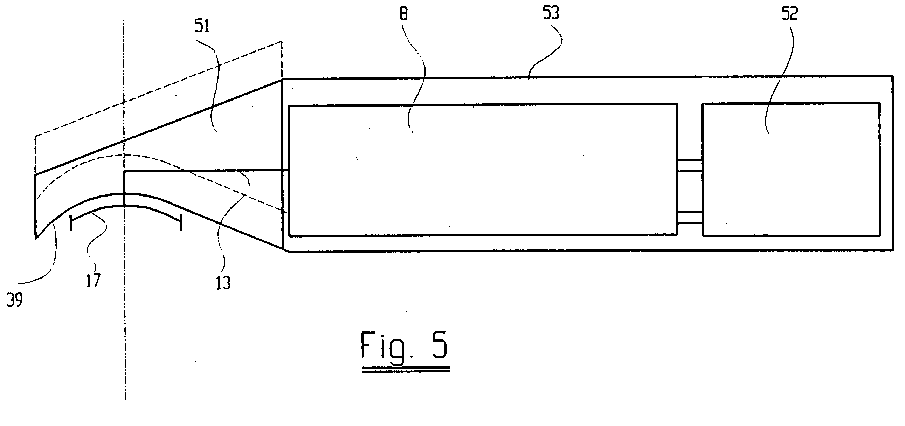

Fig. 5 zeigt ein weiteres Ausführungsbeispiel der Erfindung, bei welcher die Schälvorrichtung als handgeführtes Gerät ausgebildet ist. Dieses Gerät besitzt ein Gehäuse 53, in welcher der Antriebsmotor 8 und eine Batterie 52 angeordnet sind. Dieses Gehäuse kann zylinderförmig sein und so ausgestaltet, daß es gut in der Hand geführt werden kann. Ein Schneidkopf 51 enthält die eigentliche Schneidvorrichtung mit der Messerschneide 17 und dem Schwingarm 13, der mit dem Antriebsmotor 18 gekoppelt ist. Auch hier hat das Gehäuse eine Mulde 39, wodurch einerseits die Verletzungsgefahr verringert wird und andererseits die zu schälende Frucht besser geführt ist. Der Messerkopf 51 kann gegenüber dem Gehäuse 53 verschoben werden, wie durch die gestrichelten Linien angedeutet. Damit wird die schnittiefe verstellt. Ansonsten ist der Antrieb und die Führung des Messers entsprechend den Ausführungsbeispielen der Fig. 1 bis 4, so daß die diesbezüglichen Einzelheiten in Fig. 5 fortgelassen sind.

Die Schälvorrichtung nach Fig. 5 wird zum Schälen quer zur Längsachse des Gehäuses 53 bewegt, d.h. senkrecht zur Zeichenebene der Fig. 5.

Abschließend sei noch darauf hingewiesen, daß in den Ausführungsbeispielen der Fig. 3 bis 5 das Messer 17 auch geradlinig sein kann und nur eine lineare Bewegung durchführt. Auch hier sind mit der Erfindung grundsätzlich zwei Bewegungsmöglichkeiten ausführbar, nämlich eine Bewegung, bei der das Messer parallel zu seiner Schneide 17 hin- und herbewegt wird oder eine zweite Bewegung, bei der es senkrecht zu seiner Messerschneide hin- und herbewegt wird.

Für den Fachmann ist klar, daß weitere Modifikationen ohne weiteres möglich sind. Beispielsweise kann die Verstellung der Schneidtiefe auch dadurch erfolgen, daß nur die Arbeitsflächen 46 und 47 in Fig. 4 relativ zum übrigen Gehäuse abgesenkt oder angehoben werden.

## Patentansprüche

1. Schälvorrichtung für Früchte, mit einem mit seiner Messerschneide (17) entlang einer zu schälenden Oberfläche der Frucht (19) bewegbaren Schälmesser (15), wobei das schälmesser (15) mit einem mittels eines Antriebsaggregates (8) in Schwingung versetzten Schwingarm (13) verbunden ist, dadurch gekennzeichnet, daß der Schwingarm (13) unterhalb einer Abstützfläche (18) für die zu schälende Frucht (19) vorgesehen ist und daß das Schälmesser (15) eine Messeröffnung (16, 50) in der Abstützfläche (18, 46) durchsetzt, wobei die Messerschneide (17) über die Abstützfläche (18, 46) vorsteht.

2. Schälvorrichtung nach Anspruch 1, dadurch gekennzeichnet, daß der Schwingarm (13) das Schälmesser (15) in einer Richtung parallel zur Messerschneide (17) hin- und herbewegt.

3. Schälvorrichtung nach Anspruch 1 oder 2, dadurch gekennzeichnet, daß das Schälmesser kreissegmentförmig gebogen ist und an einer kreissegmentförmig gebogenen Führungsfläche (30) einer Messerführung (29) längs einer Kreisbahn hin- und herbeweglich geführt ist.

4. Schälvorrichtung nach Anspruch 3, dadurch gekennzeichnet, daß das Schälmesser (15) einen mit der Führungsbahn (30) der Messerführung in Berührung stehenden Messerfuß (31) aufweist und daß die Messerschneide (17) durch Stege (33, 34) im Abstand zu dem Messerfuß (31) gehalten ist, wobei zwischen der Messerschneide (17) und dem Messerfuß (31) ein Zwischenraum (32) gebildet ist.

5. Schälvorrichtung nach Anspruch 4, dadurch gekennzeichnet, daß die Messerführung (29) im Querschnitt L-förmig ausgebildet ist und daß der Messerfuß (31) an beiden schenkeln dieses L abgestützt ist.

6. Schälvorrichtung nach einem der Ansprüche 1 bis 5, dadurch gekennzeichnet, daß die Abstützfläche (18, 46) im Bereich der Messeröffnung (16, 50) eine gekrümmte (39) und/oder auszumindest zwei miteinander einen Winkel einschließenden Ebenen gebildete Oberfläche aufweist und das die Messerschneide (17) dieser Form der Abstütztfläche angepaßt ist.

7. Schälvorrichtung nach Anspruch 6, dadurch gekennzeichnet, daß die Messerschneide (17) einstellbar gegenüber der Abstützfläche (18, 46) versetzt angeordnet ist, derart, daß die Messerschneide (17) über die Abstützfläche (18, 46) herausragt.

8. Schälvorrichtung nach einem der Ansprüche 1 bis 7, dadurch gekennzeichnet, daß das Schälmesser (15) und die Messerführung (29) in einer Kammer (26) eines Gehäuses angeordnet sind und daß diese Kammer (26) eine unterhalb des Schälmessers (15) angeordnete Öffnung (27) aufweist, durch welche abgeschnittene Schalen herausfallen können.

9. Schälvorrichtung nach Anspruch 8, dadurch gekennzeichnet, daß das Gehäuse in der Seitenansicht C-förmig ist und daß die Kammer (26) und ein Boden (41) so über einen Ständer (40) miteinander verbunden sind, daß zwischen den Boden (41) und die Kammer (26) ein Auffangbehälter (43) einsetzbar ist.

10. Schälvorrichtung nach einem der Ansprüche 1 bis 9, dadurch gekennzeichnet, daß der Schwingarm (13) mit dem Antriebsaggregat (8) lösbar verbunden ist.

11. Schälvorrichtung nach einem der Ansprüche 1 bis 10, dadurch gekennzeichnet, daß das Antriebsaggregat (8) in einem seitlich am Behälter (1), vorzugsweise um eine Achse (6) schwenkbar oder entfernbar, befestigten Gehäuse (5) angeordnet ist und daß in der Seitenwand des Behälters (1) eine Durchtrittsöffnung (14) für den Schwingarm (13) vorgesehen ist.

12. Schälvorrichtung nach einem der Ansprüche 1 bis 11, dadurch gekennzeichnet, daß das Antriebsaggregat (8) im Gehäuse (5), beispielsweise durch einen mittels einer an der Gehäuseaußenseite angeordneten Rändelschraube (12) betätigbaren Schneckentrieb (11), höhenverstellbar angeordnet ist.

13. Schälvorrichtung nach einem der Ansprüche 1 bis 12, dadurch gekennzeichnet, daß der Behälter (1) aus einem Behälterunterteil (2) und einem das Gehäuse (5) für das Antriebsaggregat (8) aufweisenden Behälteroberteil (3) besteht.

14. Schälvorrichtung nach einem der Ansprüche 1 bis 13, dadurch gekennzeichnet, daß das Gehäuse (5) an seinem vom Behälter (1) abstehenden Ende mit einem, vorzugsweise schwenkbar oder abnehmbar am Gehäuse (5) befestigten, Stützfuß (7) versehen ist.

15. Schälvorrichtung nach einem der Ansprüche 1 bis 4, dadurch gekennzeichnet, daß sie als Handgerät mit einem im wesentlichen zylindrisischen Gehäuse (53) ausgebildet ist und einem Messerkopf (51), der gegenüber dem Gehäuse (53) verschiebbar ist, wobei die Messerschneide und der Schwingarm mit dem Gehäuse (53) verbunden sind.

## Claims

1. Peeling device for fruits comprising a peeling knife (15) which is movable with its knife-edge (17) along a surface of the fruit (19),
the peeling knife (15) is connected to a rocker arm (13) which is excited by means of a drive unit (8), characterized in that
the rocker arm (13) is arranged below a surface (18) that supports the fruit (19) and that the peeling knife (15) extends through a knife opening (16, 50) which is provided in the supporting surface (18, 46), the knife-edge (17) protrudes over the supporting surface (18, 46).

2. Peeling device according to claim 1, characterized in that
the rocker arm (13) moves the peeling knife (15) back and forth in a direction parallel with the knife edge (17) .

3. Peeling device according to claim 1 or 2, characterized in that
the peeling knife is curved in the form of a segment of a circle and movably guided back and forth by a guiding surface (30) of a knife guidance (29) along a circular path.

4. Peeling device according to claim 3, characterized in that
the peeling knife (15) comprises a knife base (31) which is in contact with the guiding surface (30) of the knife guidance and that the knife-edge (17) is kept in a distance with respect to the knife base (31) by means of spacers (33, 34) with an interspace (32) between the knife-edge (17) and the knife base (31).

5. Peeling device according to claim 4, characterized in that
the knife guidance (29) has a L-shaped cross-section and that the knife base (31) is supported at both legs of this L.

6. Peeling device according to one of the claims 1 to 5, characterized in that
the supporting surface (18, 46) comprises in the region of the knife opening (16, 50) a surface (39) which is curved and/or formed by at least two planes with an angle therebetween and that the knife-edge (17) is adapted to this form of the supporting surface.

7. Peeling device according to claim 6, characterized in that
the knife-edge (17) is adjustably staggered with respect to the supporting surface (18, 46) such that the knife-edge (17) protrudes from the supporting surface (18, 46).

8. Peeling device according to one of the claims 1 to 7, characterized in that
the peeling knife (15) and the knife guidance (29) are arranged in a chamber (26) of a housing and that below the peeling knife (15) this chamber (26) has an opening (27) through which cut-off peelings can drop out.

9. Peeling device according to claim 8, characterized in that
in a side view the housing is C-shaped and that the chamber (26) and a bottom (41) are connected by means of a frame (40) such that a catch-container (43) is insertable between the bottom (41) and the chamber (26).

10. Peeling device according to one of claims 1 to 9, characterized in that
the rocker arm (13) is separable connected to the drive unit (8).

11. Peeling device according to one of the claims 1 to 10, characterized in that
the drive unit (8) is arranged in a housing (5) which is latterally fixed on the container (1), preferably pivotable around an axis (6) or removable and that a passage opening (14) for the rocker arm (13) is provided in the sidewall of the container (1).

12. Peeling device according to one of the claims 1 to 11, characterized in that
the drive unit (8) is arranged inside the housing (5) such that it is vertically adjustable for example by means of a worm drive (11) which is operable by a knurled-head screw (12) which is arranged at the outer side of the housing.

13. Peeling device according to one of the claims 1 to 12, characterized in that
the container (1) consists of a container bottom part (2) and a container upper part (3) which comprises the housing (5) for the drive unit (8).

14. Peeling device according to one of the claims 1 to 13, characterized in that
the housing (5) comprises at its end, which protrudes from the container (1), a supporting leg (7) which is fixed to the housing (5), preferably in a pivotable or removable manner.

15. Peeling device according to one of the claims 1 to 4, characterized in that
it is a hand apparatus with a housing (53) which is basically cylindrical and a knife head (51), which is slidable with respect to the housing (53), the knife-edge and the rocker arm are connected to the housing (53).

## Revendications

1. Dispositif d'épluchage pour fruits avec un couteau d'épluchage (15) mobile dont l'arête (17) se déplace le long de la surface du fruit (19) à éplucher, dans lequel le couteau d'épluchage (15) est relié à un bras oscillant (13) actionné par l'intermédiaire d'un équipement moteur (8), caractérisé en ce que le bras oscillant (13) est prévu en dessous d'une surface d'appui (18) pour le fruit à éplucher (19) et que le couteau d'épluchage (15) traverse une ouverture de couteau (16, 50) dans la surface d'appui (18, 46), de sorte que l'arête de couteau (17) dépasse de la surface d'appui (18, 46).

2. Dispositif d'épluchage selon la revendication 1, caractérisé en ce que le bras oscillant (13) imprime au couteau d'épluchage (15) un mouvement de va-et-vient parallèle à l'arête du couteau (17).

3. Dispositif d'épluchage selon la revendication 1 ou 2, caractérisé en ce que le couteau d'épluchage présente une courbure en forme de segment de cercle et qu'il est guidé pour ses mouvements de va-et-vient le long d'une surface de guidage (30) en forme de segment de cercle d'un guidage de couteau (29).

4. Dispositif d'épluchage selon la revendication 3, caractérisé en ce que le couteau d'épluchage (15) présente un pied de couteau (31) en contact avec la surface de guidage (30) du couteau et que l'arête du couteau (17) est maintenue à distance du pied de couteau (31) par des entretoises (33, 34), de sorte qu'il existe un espace (32) entre l'arête de couteau (17) et le pied de couteau (31).

5. Dispositif d'épluchage selon la revendication 4, caractérisé en ce que le guidage de couteau (29) présente une section en forme de L et que le pied de couteau (31) s'appuie sur les deux côtés de ce L.

6. Dispositif d'épluchage selon l'une des revendications 1 à 5, caractérisé en ce que la surface d'appui (18, 46) présente au niveau de l'ouverture de couteau (16, 50) une surface courbée (39) et/ou au moins deux plans formant un angle et que l'arête de couteau (17) est adaptée à cette forme de surface d'appui.

7. Dispositif d'épluchage selon la revendication 6, caractérisé en ce que l'arête de couteau (17) est disposée de façon réglable vis-à-vis de la surface d'appui (18, 46), de telle sorte que l'arête de couteau (17) dépasse la surface d'appui (18, 46).

8. Dispositif d'épluchage selon l'une des revendications 1 à 7, caractérisé en ce que le couteau d'épluchage (15) et le guidage de couteau (29) sont disposés dans une chambre (26) d'un carter et que cette chambre (26) présente une ouverture (27) située en dessous du couteau d'épluchage (15) et par laquelle les épluchures peuvent être évacuées.

9. Dispositif d'éplucnage selon la revendication 8, caractérisé en ce que le carter présente une vue de côté en forme de C et que la chambre (26) et un fond (41) sont reliés par l'intermédiaire d'un bâti (40), de sorte que l'on puisse placer un bac récepteur (43) entre le fond (41) et la chambre (26).

10. Dispositif d'épluchage selon l'une des revendications 1 à 9, caractérisé en ce que le bras oscillant (13) est relié à l'équipement moteur (8) de façon détachable.

11. Dispositif d'épluchage selon l'une des revendications 1 à 10, caractérisé en ce que l'équipement moteur (8) est disposé de façon basculable autour d'un axe (6) ou détachable dans un carter (5) sur le côté du réservoir (1) et que dans la paroi latérale du réservoir (1) on prévoit une ouverture de passage (14) pour le bras oscillant (13).

12. Dispositif d'épluchage selon l'une des revendications 1 à 11, caractérisé en ce que l'équipement moteur (8) est disposé dans un carter (5), et ceci de façon réglable en hauteur, par exemple par l'intermédiaire d'un engrenage à vis sans fin (11) actionnable à l'aide d'une vis moletée (12) disposée à l'extérieur du carter.

13. Dispositif d'épluchage selon l'une des revendications 1 à 12, caractérisé en ce que le réservoir (1) est composé d'une partie inférieure de réservoir (2) et d'une partie supérieure de réservoir (3) comprenant le carter (5) de l'équipement moteur (8).

14. Dispositif d'épluchage selon l'une des revendications 1 à 13, caractérisé en ce que le carter (5) présente à son extrémité partant du réservoir (1) un pied d'appui (7) basculable ou détachable qui est fixé sur le carter (5).

15. Dispositif d'épluchage selon l'une des revendications 1 à 4, caractérisé en ce qu'il se présente comme appareil manuel avec un carter (53) essentiellement cylindrique et une tête de lame (51) mobile par rapport au carter (53), dans lequel l'arête de couteau et le bras oscillant sont reliés au carter (53).
